# EUROPEAN PATENT APPLICATION

(11) **EP 4 597 178 A1**
(43) Date of publication of application: **06.08.2025**
(21) Application number: 23876307.2
(22) Date of filing: 31.07.2023
(51) Int. Cl.: G02B 6/00, G02B 27/01

(54) **OPTICAL WAVEGUIDE ASSEMBLY AND AUGMENTED REALITY DEVICE**

(30) Priority: 14.10.2022 CN 202211260683
(71) Applicant: GUANGDONG OPPO MOBILE TELECOMMUNICATIONS CORP., LTD., Dongguan, Guangdong 523860 (CN)
(72) Inventor: YUAN, Guangzhong, Dongguan, Guangdong 523860 (CN); LIN, Fengming, Dongguan, Guangdong 523860 (CN); YE, Wanjun, Dongguan, Guangdong 523860 (CN)
(74) Representative: Penza, Giancarlo
(86) International application number: PCT/CN2023/110261
(87) International publication number: WO 2024/078101

(57) **Abstract**

Provided are an optical waveguide assembly (100) and an augmented reality device (500). The optical waveguide assembly (100) includes an optical waveguide (10). The optical waveguide (10) includes a light guide layer (11) and a grating layer (13). The light guide layer (11) is made of a resin material, and configured to guide an optical signal entering the light guide layer (11). The grating layer (13) is arranged on a side of the light guide layer (11), and includes an in-coupling grating (131) and an out-coupling grating (133) which are spaced apart from each other. The refractive index of the grating layer (13) is greater than the refractive index of the light guide layer (11). The optical waveguide assembly (100) is light in terms of weight and strong in terms of anti-drop capability, and has relatively high optical efficiency.

## Description

### TECHNICAL FIELD

The disclosure relates to the field of electronics, and in particular to an optical waveguide assembly and an augmented reality device.

### BACKGROUND

The augmented reality (AR) technology may combine virtuality and reality, and it is currently being applied more and more widely. An optical waveguide is a medium that guides propagation of light waves therein, and it may guide light projected by a micro-projector to the front of glasses so that a virtual image is superimposed on a real image in front of the human eyes. Therefore, the optical waveguide is an indispensable component of augmented reality devices. The optical waveguides include geometric optical waveguides and diffraction optical waveguides. Compared with geometric optical waveguides, the gratings of diffraction optical waveguides have higher flexibility in design and production, and have higher mass producibility and yield, and therefore diffraction optical waveguides are more widely used. The existing optical waveguides are mostly made of glass which has a high density, and a heavy load is applied on the bridge of the nose wearing the augmented reality device, which is not user-friendly. In addition, since glass is brittle, glass-based optical waveguides have poor mechanical reliability, and they are very fragile when dropped; also, sharp glass fragments from the broken glass are dangerous.

### SUMMARY

Embodiments of the present disclosure provide an optical waveguide assembly. The optical waveguide assembly includes an optical waveguide, and the optical waveguide includes:
the optical waveguide assembly includes an optical waveguide, and the optical waveguide includes:
a light guide layer, where the light guide layer is made of a resin material and configured to guide an optical signal entering the light guide layer; and
a grating layer arranged on a side of the light guide layer, where the grating layer includes an in-coupling grating and an out-coupling grating spaced apart from each other, and a refractive index of the grating layer is greater than a refractive index of the light guide layer.

The embodiments of the present disclosure further provide an augmented reality device, and the augmented reality device includes:
a projection optical engine, where the projection optical engine is configured to project an optical signal, and the optical signal includes image information; and
the optical waveguide assembly described in the embodiments of the present disclosure, where the optical waveguide assembly is configured to guide the optical signal.

### BRIEF DESCRIPTION OF THE DRAWINGS

In order to more clearly illustrate technical solutions of the embodiments of the present disclosure, drawings required for the embodiments will be briefly introduced below. Apparently, the drawings described below are only some embodiments of the present disclosure. For those of ordinary skill in the art, other drawings can be obtained based on these drawings without creative work.
FIG. 1 is a schematic top view illustrating the structure of an optical waveguide assembly provided by an embodiment of the present disclosure.
FIG. 2 is a schematic cross-sectional view of the optical waveguide assembly provided by the embodiment of the present disclosure taken along the A-A direction shown in FIG. 1.
FIG. 3 is a schematic top view illustrating the structure of an optical waveguide assembly provided by another embodiment of the present disclosure.
FIG. 4 is a schematic cross-sectional view of an optical waveguide assembly provided by a further embodiment of the present disclosure taken along the A-A direction shown in FIG. 1.
FIG. 5 is a schematic cross-sectional view of an optical waveguide assembly provided by yet a further embodiment of the present disclosure taken along the A-A direction shown in FIG. 1.
FIG. 6 is a schematic cross-sectional view of an optical waveguide assembly provided by yet a still further embodiment of the present disclosure taken along the A-A direction shown in FIG. 1.
FIG. 7 is a schematic cross-sectional view of an optical waveguide assembly provided by yet a still further embodiment of the present disclosure taken along the A-A direction shown in FIG. 1.
FIG. 8 is a schematic diagram illustrating the structure of a first protective layer or a second protective layer provided by an embodiment of the present disclosure.
FIG. 9 is a schematic diagram illustrating the structure of the first protective layer or the second protective layer provided by an embodiment of the present disclosure.
FIG. 10 is a schematic diagram illustrating the structure of the first protective layer or the second protective layer provided by another embodiment of the present disclosure.
FIG. 11 is a schematic diagram illustrating the structure of the first protective layer or the second protective layer provided by a further embodiment of the present disclosure.
FIG. 12 is a picture of the product of Example 3 of the present disclosure.
FIG. 13 is a picture of the product of Comparative Example 1 of the present disclosure.
FIG. 14 is a schematic diagram illustrating the structure of an augmented reality device provided by an embodiment of the present disclosure.
FIG. 15 is a schematic cross-sectional view of an augmented reality device provided by the embodiment of the present disclosure taken along the D-D direction shown in FIG. 14.
FIG. 16 is a circuit block diagram of an augmented reality device provided by an embodiment of the present disclosure.

### Explanation of the reference signs:

100-optical waveguide assembly, 10-optical waveguide, 11-light guide layer, 13-grating layer, 131-in-coupling grating, 133-out-coupling grating, 1331-out-coupling sub-grating, 135-turning grating, 30-barrier layer, 50-anti-reflection film, 20-first protective layer, 21-protective substrate layer, 23-color-changing layer, 25-anti-reflection coating, 27-anti-fingerprint film, 60-first connector, 70-second protective layer, 90-second connector, 500-augmented reality device, 510-projection optical engine, 511-display, 513-lens, 530-wearing part, 531-first wearing subpart, 533-second wearing subpart, 550-carrier, 540-processor, and 560-memory.

### DETAILED DESCRIPTION OF PREFERRED EMBODIMENTS

In a first aspect, the embodiments of the present disclosure provide an optical waveguide assembly. The optical waveguide assembly includes an optical waveguide, and the optical waveguide includes:
a light guide layer, where the light guide layer is made of a resin material and configured to guide an optical signal entering the light guide layer; and
a grating layer arranged on a side of the light guide layer, where the grating layer includes an in-coupling grating and an out-coupling grating spaced apart from each other, and a refractive index of the grating layer is greater than a refractive index of the light guide layer.

In some implementations, the optical waveguide further includes a barrier layer arranged between the light guide layer and the grating layer.

In some implementations, the refractive index of the grating layer is n1, the refractive index of the barrier layer is n2, and |n1-n2|≤0.3.

In some implementations, the refractive index of the light guide layer is n3, and |n2-n3|≤0.2.

In some implementations, the barrier layer is an organic barrier layer or an inorganic barrier layer. The organic barrier layer includes an acrylic resin. The inorganic barrier layer includes at least one of silicon oxide, magnesium oxide, and aluminum oxide.

In some implementations, when the barrier layer is an organic barrier layer, the thickness of the organic barrier layer ranges from 1 µm to 10 µm. When the barrier layer is an inorganic barrier layer, the thickness of the inorganic barrier layer ranges from 20 nm to 1000 nm.

In some implementations, the roughness Ra of a surface of the barrier layer facing the grating layer is in a range of Ra≤2 nm.

In some implementations, a birefringence-induced phase difference of the light guide layer is less than or equal to 20 nm.

In some implementations, the refractive index n3 of the light guide layer is in a range of n3≥1.55.

In some implementations, the light guide layer is made of a thermoplastic resin or a thermosetting resin, the thermoplastic resin includes polycarbonate, and the thermosetting resin includes polyurethane.

In some implementations, the grating layer is made of a resin material, and the material of the light guide layer is different from the material of the grating layer.

In some implementations, the optical waveguide further includes an anti-reflection film arranged on a surface of the light guide layer facing away from the grating layer.

In some implementations, the reflectivity of the anti-reflection film is less than 1%.

In some implementations, the light guide layer is prepared through an injection molding process or a casting process, and the grating layer is prepared through a nanoimprinting process.

In some implementations, the optical waveguide assembly further includes:
a first protective layer, where the first protective layer is arranged on a side of the grating layer facing away from the light guide layer and is spaced apart from the grating layer; and
a first connector, where the first connecter is arranged between the optical waveguide and the first protective layer and connected with each of the first protective layer and the optical waveguide, and the first connector is provided around a periphery of the grating layer.

In some implementations, the optical waveguide assembly further includes:
a second protective layer, where the second protective layer is arranged on a side of the light guide layer facing away from the grating layer and is spaced apart from the light guide layer; and
a second connector, where the second connector is arranged between the optical waveguide and the second protective layer and connected with each of the second protective layer and the optical waveguide.

In some implementations, each of the first protective layer and the second protective layer includes a protective substrate layer and a color-changing layer, and the color-changing layer is arranged on a surface of the protective substrate layer.

In some implementations, each of the first protective layer and the second protective layer further includes an anti-reflection coating, and the anti-reflection coating is arranged on a surface of the protective substrate layer, or the anti-reflection coating is arranged on a surface of the color-changing layer facing away from the protective substrate layer.

In a second aspect, the embodiments of the present disclosure provide an augmented reality device, and the augmented reality device includes:
a projection optical engine, where the projection optical engine is configured to project an optical signal, and the optical signal includes image information; and
the optical waveguide assembly described in the first aspect, where the optical waveguide assembly is configured to guide the optical signal.

In some implementations, the augmented reality device further includes a carrier configured to carry the optical waveguide assembly, and the carrier includes a spectacle frame, a helmet body, or a mask body.

In order to enable those skilled in the art to better understand the technical solutions of the present disclosure, the technical solutions in the embodiments of the present disclosure will be clearly and comprehensively described below in conjunction with the drawings in the embodiments of the present disclosure. Apparently, the described embodiments are only part of the embodiments of the present disclosure, not all of the embodiments. Based on the embodiments in the disclosure, all other embodiments obtained by those of ordinary skill in the art without making any creative work shall fall within the scope of protection of the disclosure.

Terms "first", "second" and the like in the specification and claims of the disclosure and the above drawings are used to distinguish different objects rather than describing a specific order. In addition, terms "include/comprise" and "have" and any variations thereof are intended to cover a non-exclusive inclusion. For example, a process, method, system, product or device including a series of steps or units is not limited to the listed steps or units, but may optionally include unlisted steps or units, or may optionally include other steps or units inherent to the process, method, product or device.

The technical solutions in the embodiments of the present disclosure will be described below in conjunction with the accompanying drawings. It is notable that, for the convenience of explanation, the same reference sign represents the same component in the embodiments of the present disclosure; and for the sake of brevity, detailed descriptions of the same components are omitted in different embodiments.

Augmented reality is a technology that provides users with enhanced perception of reality by superimposing an input computer-generated image onto an image of the real world and inputting the result to the human eyes. It is currently being applied more and more widely. An optical waveguide is a medium that guides propagation of light waves therein, and is an essential component for augmented reality devices. Optical waveguides include geometric optical waveguides and diffraction optical waveguides. Compared with geometric optical waveguides, the gratings of diffraction optical waveguides have higher flexibility in design and production, and have higher mass manufacturability and yield, and therefore diffraction optical waveguides are more widely used. For example, the diffraction optical waveguide solution for AR glasses is a mainstream technical solution because its optical lenses are light and thin, its appearance is closer to traditional glasses, and it is more convenient to implement and easier to mass produce. Diffraction optical waveguides may be further divided into surface relief gratings and volume holographic gratings.

Diffraction optical waveguides such as surface relief optical waveguides may be formed on a glass substrate by preparing a grating structure on the glass substrate through a nanoimprint process. The glass substrate has a high density, and when it is used in augmented reality glasses, a heavy load is applied on the bridge of the nose wearing the augmented reality glasses. In addition, since glass is brittle, glass-based optical waveguides have poor mechanical reliability, and they are very fragile when dropped; also, sharp glass fragments from the broken glass are dangerous. Diffraction optical waveguides may also be prepared through an injection molding or casting process so that the light guide layer and the grating in the prepared optical waveguide are integrally formed and made of a same material. However, due to limitations on materials of the injection molding process and the casting process, the refractive index of the material is low. Therefore, the refractive index of the obtained in-coupling grating is also low, which would reduce the efficiency of the in-coupling grating in coupling the optical signal and reduce the optical efficiency of the optical waveguide.

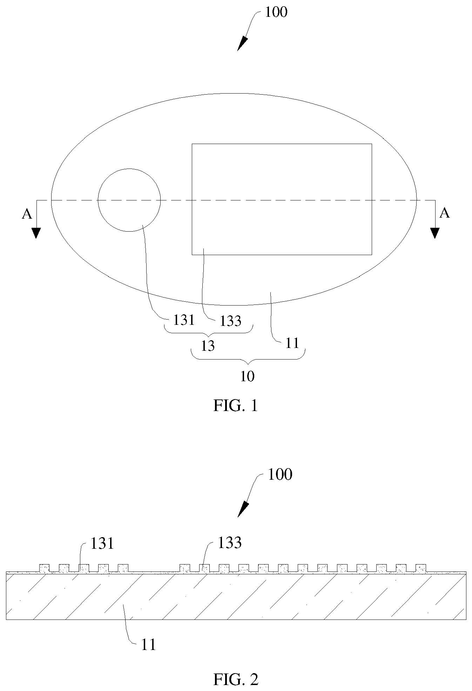

As illustrated in FIG. 1 and FIG. 2, in a first aspect, the embodiments of the present disclosure provide an optical waveguide assembly 100. The optical waveguide assembly 100 includes an optical waveguide 10, the optical waveguide 10 is configured to guide transmission of an optical signal incident on the optical waveguide 10, and perform one-dimensional or two-dimensional pupil expansion on image information in the optical signal. The optical waveguide 10 includes a light guide layer 11 and a grating layer 13. The light guide layer 11 is made of a resin material, and is configured to guide the optical signal entering the light guide layer 11. The grating layer 13 is arranged on a side of the light guide layer 11. The grating layer 13 includes an in-coupling grating 131 and an out-coupling grating 133 spaced apart from each other. The in-coupling grating 131 is configured to couple optical signals into the light guide layer 11, and the out-coupling grating 133 is configured to couple the optical signals guided by the light guide layer 11 out of the optical waveguide 10. The refractive index of the grating layer 13 is greater than the refractive index of the light guide layer 11. The optical waveguide 10 of the embodiments of the present disclosure may be applied to near-eye display systems such as augmented reality glasses, augmented reality helmets, and augmented reality masks.

In some implementations, the in-coupling grating 131 and the out-coupling grating 133 are both made of a resin material. In some implementations, the grating layer 13 and the light guide layer 11 are made of different materials. It may be understood that the grating layer 13 and the light guide layer 11 have different compositions. It may also be understood that the grating layer 13 and the light guide layer 11 are made of different resins.

In some implementations, the in-coupling grating 131 may be, but is not limited to, a binary grating, a tilted grating, a blazed grating, a two-dimensional grating, or the like. The out-coupling grating 133 may be, but is not limited to, a binary grating, a tilted grating, a blazed grating, a two-dimensional grating, or the like. The types of the in-coupling grating 131 and the out-coupling grating 133 may be the same or different.

In some implementations, the grating period of the in-coupling grating 131 ranges from 200 nm to 800 nm, and the grating depth thereof is less than and equal to 300 nm. The grating period of the out-coupling grating 133 ranges from 200 nm to 800 nm, and the grating depth thereof is less than and equal to 300 nm. In the embodiments of the present disclosure, when a numerical value range from "a" to "b" is involved, unless otherwise specified, it means that the numerical value may be any numerical value between "a" and "b", including the endpoint numerical values "a" and "b".

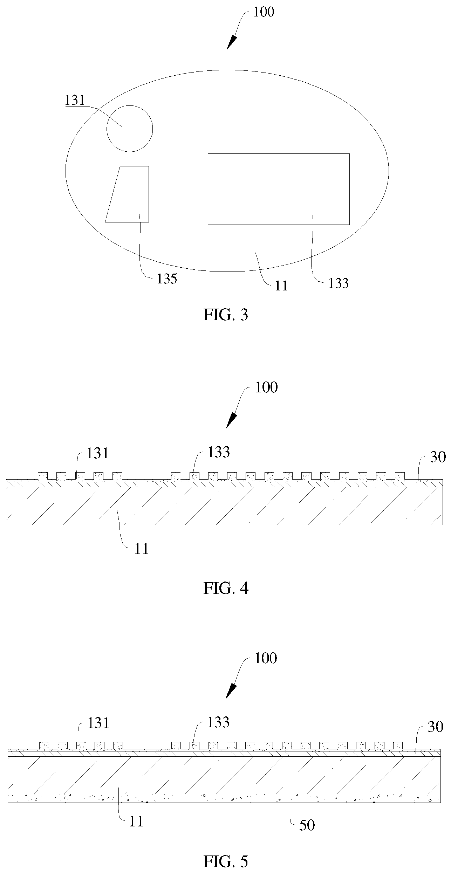

As illustrated in FIG. 3, in some implementations, the grating layer 13 further includes a turning grating 135. The turning grating 135 is configured to perform pupil expansion on the image information in the optical signal. The turning grating 135, the in-coupling grating 131 and the out-coupling grating 133 are arranged on the same side of the light guide layer 11, and they are spaced apart from each other. When the grating layer 13 further includes the turning grating 135, the optical signal coupled into the light guide layer 11 is coupled out of the optical waveguide 10 through the out-coupling grating 133 after undergoing the pupil expansion by the turning grating 135. In some implementations, the turning grating 135 may be, but is not limited to, a binary grating, a tilted grating, a blazed grating, a two-dimensional grating, or the like. The types of the turning grating 135, the in-coupling grating 131 and the out-coupling grating 133 may be the same or different. In some implementations, the grating period of the turning grating 135 ranges from 200 nm to 800 nm, and the grating depth thereof is less than or equal to 300 nm.

The optical waveguide assembly 100 of the present embodiment includes the optical waveguide 10, and the optical waveguide 10 includes the light guide layer 11 and the grating layer 13. The refractive index of the grating layer 13 is greater than the refractive index of the light guide layer 11. The grating layer 13 has a higher refractive index, thereby improving the coupling efficiency of the in-coupling grating 131 in coupling the optical signal, and improving the optical efficiency of the optical waveguide 10. In addition, the light guide layer 11 is made of a resin material. Compared with glass, resin has a lighter weight, so that the optical waveguide 10 can have a lighter weight. When the optical waveguide is applied to an augmented reality device, the weight of the augmented reality device can be reduced and the wearing comfort of the augmented reality device can be improved. Furthermore, the optical waveguide 10 made of resin is not easy to break when dropped, it has better safety and a lower cost.

In some implementations, the light guide layer 11 is made of a thermoplastic resin or a thermosetting resin. The thermoplastic resin includes polycarbonate (PC), and the thermosetting resin includes polyurethane (PU). Polycarbonate and polyurethane have a high refractive index, which enables the manufactured optical waveguide 10 to have a large field of view (FOV) and better optical performance. In addition, the transmittance of each of polycarbonate and polyurethane in at least one of three bands of blue light 420nm-500nm, green light 500nm-560nm, red light 560nm-780nm is greater than 99% at a thickness of 1 mm, which is an excellent light transmittance. If the light transmittance of the light guide layer 11 is too low and the absorption thereof is too strong, the light would gradually attenuate during propagation in the optical waveguide 10, resulting in a significant reduction in brightness. Furthermore, each of polycarbonate and polyurethane have a high heat deformation temperature (which is higher than 120°C for polycarbonate, and which is higher than 110°C for polyurethane), this can better withstand the baking temperature (e.g., 80°C to 120°C) of the imprint resist and the coating temperature (e.g., 80°C to 120°C) applied when a barrier layer is formed through high-temperature coating. Furthermore, each of polycarbonate and polyurethane has low birefringence, which can better prevent the light (i.e., the optical signal) from being deflected during total reflection in the light guide layer 11 and thus prevent the brightness and clarity of the actual image from being affected, so that the optical waveguide 10 has a better display effect.

In some implementations, the refractive index of the light guide layer 11 is greater than or equal to 1.55. It may be understood that the refractive index of each of the polycarbonate and polyurethane in the embodiments of the present disclosure is greater than or equal to 1.55.

In some implementations, the birefringence-induced phase difference of the light guide layer 11 is less than or equal to 20 nm. When the light guide layer 11 is made of polycarbonate, the birefringence-induced phase difference of the light guide layer 11 is less than or equal to 20 nm. When the light guide layer 11 is made of polyurethane, the birefringence-induced phase difference of the light guide layer 11 is less than or equal to 5 nm. Specifically, the birefringence-induced phase difference of the light guide layer 11 may be, but is not limited to, 20 nm, 18 nm, 16 nm, 14 nm, 12 nm, 10 nm, 8 nm, 6 nm, 5 nm, 3 nm, 1 nm, etc. The smaller the birefringence-induced phase difference of the light guide layer 11, the better. If the birefringence-induced phase difference of the light guide layer 11 is too large, the birefringence would cause the light inside the light guide layer 11 to be deflected during total reflection, which would result in not only reduced brightness but also poor image clarity when reflected in the AR display.

In some embodiments, the light guide layer 11 is prepared through an injection molding process, and the grating layer 13 is prepared through a nanoimprinting process. In some other embodiments, the light guide layer 11 is prepared through a casting process, and the grating layer 13 is prepared through a nanoimprinting process.

Although the polycarbonate material can provide a small birefringence, when the thermoplastic material is molded by the injection molding process, it is difficult to better control the internal stress of the injection molding process, and thus the light guide layer 11 made of thermoplastic plastic still has a small amount of birefringence. Considering the incompatibility between polycarbonate materials and solvents for the imprint resist, a barrier layer is added. Therefore, the light guide layer 11 of the optical waveguide 10 for augmented reality display may also be made of thermosetting (small molecule monomer material is cured into polymeric solid material through a certain heating process) transparent plastic. Since the thermosetting material is a material obtained by curing small molecular monomer material into polymeric solid material through a certain heating process, the internal stress thereof is generally more uniform, that is, the birefringence performance is better.

Specifically, when the light guide layer 11 is made of a thermoplastic resin such as polycarbonate, the light guide layer 11 is prepared through an injection molding process. When the light guide layer 11 is made of a thermosetting resin such as polyurethane, the light guide layer 11 is prepared through a casting process. The light guide layer 11 is prepared through an injection molding process or a casting process. Compared with the grating layer 13 prepared through an injection molding process, the grating layer 13 prepared through a nanoimprinting process can be better compatible with the existing preparation process of the optical waveguide 10, reduce the preparation cost of the optical waveguide 10; in addition, the viscosity of the imprint resist (raw material) used in the nanoimprinting process is low, and the imprint resist can more easily enter the nanoscale grating structure of the imprinting mold, so that the microstructure of the prepared nanoscale grating layer 13 can be more refined and complete. Furthermore, due to the limitations of the injection molding process and the casting process, the refractive index of the raw material is low. When the grating layer 13 is prepared through the nanoimprinting process, an imprint resist with a high refractive index may be selected to obtain an optical waveguide 10 whose in-coupling grating 131 has a high refractive index. The high refractive index of the in-coupling grating 131 can improve the efficiency of the in-coupling grating 131 in coupling the optical signal into the light guide layer 11, thereby improving the optical efficiency of the optical waveguide 10. In addition, in the process of preparing the grating layer 13, the imprint resist is first coated on the surface of the light guide layer 11, and then baked (for example, at a temperature of 80°C to 120°C) to remove the solvent; thereafter, it is imprinted using an imprinting mold with a grating texture, and the grating layer 13 is obtained after photocuring (for example, UV curing).

The light guide layer 11 is prepared through the injection molding process. When the light guide layer 11 is made of a thermosetting resin such as polyurethane, the light guide layer 11 is prepared through the casting process.

In some implementations, the thickness of the light guide layer 11 is 0.3 mm to 3 mm. Specifically, the thickness of the light guide layer 11 may be, but is not limited to, 0.3 mm, 0.5 mm, 0.8 mm, 1.0 mm, 1.5 mm, 2 mm, 2.5 mm, 3 mm, etc. If the thickness of the light guide layer 11 is too thin, the structural strength of the light guide layer 11 is too weak. If the thickness of the light guide layer 11 is too thick, the manufactured optical waveguide assembly 100 is heavy which affects the user experience.

The imprint resist used for preparation of the grating layer 13 through nanoimprinting is usually an acrylate system or polysiloxane system material, and requires a very low viscosity. Therefore, a large amount of organic solvents must be used. Both systems of the imprint resist require propylene glycol methyl ether acetate (PFMEA) as an organic solvent. When the light guide layer 11 is made of polycarbonate, the propylene glycol methyl ether acetate would corrode the polycarbonate substrate. The propylene glycol methyl ether acetate would react on the surface of the polycarbonate, thereby affecting the optical properties of the light guide layer 11. In addition, when the light guide layer 11 is made of a resin material, it is prepared through the injection molding process or casting process. Therefore, the roughness Ra of the surface of the obtained light guide layer 11 is low, which is usually greater than 2 nm, for example, 2 nm to 5 nm. Moreover, since the plastic material is relatively soft and difficult to polish, it is difficult for the surface roughness to reach the level of glass. Therefore, the present disclosure proposes a further improved solution.

As illustrated in FIG. 4, in some embodiments, the optical waveguide 10 further includes a barrier layer 30. The barrier layer 30 is arranged between the light guide layer 11 and the grating layer 13. It may be understood that the light guide layer 11, the barrier layer 30 and the grating layer 13 are stacked in sequence. When polycarbonate is used for the light guide layer 11 and the grating layer 13 is prepared through the nanoimprinting technology, the provision of the barrier layer 30 between the light guide layer 11 and the grating layer 13 may prevent the imprint resist used for the formation of the grating layer 13 from corroding the light guide layer 11 made of polycarbonate, and prevent the optical performance of the optical waveguide 10 from being affected. In addition, the barrier layer 30 may have a planarization effect, which may better reduce the scattering effect of the surface of the light guide layer 11 on light, preventing a decrease in the clarity of the image presented by the optical waveguide 10. When polyurethane is used for the light guide layer 11, the PGMEA solvent in the common imprint resist would not react on the surface of the polyurethane material, so no barrier is required on the surface of the polyurethane material. However, the addition of the barrier layer 30 on the surface of the light guide layer 11 made of polyurethane can increase the planarization effect and reduce the roughness.

In some embodiments, the refractive index of the grating layer 13 is n1, and the refractive index of the barrier layer 30 is n2, then |n1-n2|≤0.3.In a specific embodiment, the refractive index n1 of the grating layer 13 is greater than the refractive index n2 of the barrier layer 30, and n1-n2≤0.3. Specifically, |n1-n2| may be, but is not limited to, 0.3, 0.25, 0.2, 0.15, 0.1, 0.05, 0, etc. When there is a large difference between refractive indexes of the grating layer 13 and the barrier layer 30, the reflectivity at the interface between the grating layer 13 and the barrier layer 30 would be increased, so that more light of the real scene is reflected, and the light passing through the optical waveguide 10 and entering the human eyes is weakened, thereby reducing the brightness of the real scene image and making the real scene darker.

In some embodiments, the refractive index of the light guide layer 11 is n3, and the refractive index of the light guide layer 11 and the refractive index of the barrier layer 30 satisfy |n2-n3|≤0.2. Furthermore, the refractive index n2 of the barrier layer 30 and the refractive index n3 of the light guide layer 11 satisfy |n2-n3|≤0.1. Specifically, |n2-n3| may be, but is not limited to, 0.3, 0.25, 0.2, 0.15, 0.1, 0.5, 0.01, 0, etc. The closer the refractive index of the light guide layer 11 is to the refractive index of the barrier layer 30, the better. The light guide layer 11 is made of a resin material, and its surface flatness is relatively poor. When the barrier layer 30 is made of a material with a refractive index that is closer or equal to that of the light guide layer 11, the light guide layer 11 and the barrier layer 30 are optically uniform. If the difference between the refractive indexes of the light guide layer 11 and the barrier layer 30 is too large, although the surface of the light guide layer 11 is flattened by the barrier layer 30, the optical uniformity is still slightly poor. In this case, there would still be scattering at the interface between the barrier layer 30 and the light guide layer 11, and the reflection of the light of the real scene is increased, which affects the clarity of the image displayed by the optical waveguide 10.

In some embodiments, the barrier layer 30 is an organic barrier layer or an inorganic barrier layer. The organic barrier layer includes an acrylic resin, such as polymethyl methacrylate. The inorganic barrier layer for example includes at least one transparent material selected from silicon oxide, magnesium oxide, aluminum oxide and the like. These materials would not be corroded by the propylene glycol methyl ether acetate in the imprint resist, and have an excellent barrier effect; they also have a low surface roughness, and thus a better planarization effect. When an organic barrier layer made of for example an acrylic resin is used as the barrier layer 30, since the organic barrier layer is at a micron-level thickness which is relatively thick, a solvent-free system may be used to form the barrier layer by spin coating and then UV curing. Therefore, it is not necessary to use the propylene glycol methyl ether acetate as a solvent in preparation of the barrier layer 30. The inorganic barrier layer 30 is likely to generate a stress which causes the light guide layer 11 to warp, and therefore the organic barrier layer is preferred. In addition, when preparing the organic barrier layer, the acrylic resin may be first coated (for example, through spin coating or scraping), and then a flat and smooth plate is used to press the acrylic resin, so that the roughness of the surface of the obtained barrier layer 30 is lower than the roughness of the light guide layer 11 obtained through the injection molding or casting process.

In some embodiments, when the barrier layer 30 is an organic barrier layer, the thickness of the organic barrier layer ranges from 1 µm to 10 µm. Specifically, the thickness of the organic barrier layer may be, but is not limited to, 1 µm, 2 µm, 3 µm, 4 µm, 5 µm, 6 µm, 7 µm, 8 µm, 9 µm, 10 µm, etc. When the organic barrier layer is too thin, it cannot effectively prevent the organic solvent in the imprint resist used to prepare the grating layer 13 from corroding the light guide layer 11. When the organic barrier layer is too thick, the roughness of the barrier layer 30 is easily increased, and the cost is increased.

In some other embodiments, when the barrier layer 30 is an inorganic barrier layer, the thickness of the inorganic barrier layer ranges from 20 nm to 1000 nm. In particular, the thickness of the inorganic barrier layer ranges from 300 nm to 1000 nm. Specifically, the thickness of the inorganic barrier layer may be, but is not limited to, 20 nm, 50 nm, 100 nm, 200 nm, 300 nm, 400 nm, 500 nm, 600 nm, 700 nm, 800 nm, 900 nm, 1000 nm, etc. When the inorganic barrier layer is too thin, it cannot effectively prevent the organic solvent in the imprint resist used to prepare the grating layer 13 from corroding the light guide layer 11. When the inorganic barrier layer 30 is too thick, there is a large stress of the organic barrier layer 30, which affects the adhesion of the inorganic barrier layer 30 on the light guide layer 11 and increases the cost. In some implementations, the inorganic barrier layer may be formed through a coating process such as magnetron sputtering, or evaporation coating.

In some implementations, the roughness Ra of the surface of the barrier layer 30 facing the grating layer 13 is in a range of Ra≤2 nm. Specifically, the roughness Ra of the surface of the barrier layer 30 facing the grating layer 13 may be, but is not limited to, 2 nm, 1.5 nm, 1 nm, 0.5 nm, etc. If the roughness Ra of the surface of the barrier layer 30 facing the grating layer 13 is too large, scattering is likely to occur, which causes light leakage in the optical waveguide 10, reduces the contrast and optical efficiency, and results in poor image clarity.

As illustrated in FIG. 5, in some embodiments, the optical waveguide 10 further includes an anti-reflection film 50. The anti-reflection film 50 is arranged on a surface of the light guide layer 11 facing away from the grating layer 13, to improve the transmittance of the external ambient light and improve the efficiency of light propagation in the optical waveguide 10. In addition, the anti-reflection film 50 also provides a planarization effect.

In some implementations, the reflectivity of the anti-reflection film 50 is less than 1%. The anti-reflection film 50 includes at least one of silicon dioxide, magnesium fluoride, titanium dioxide, niobium pentoxide, zirconium dioxide and the like. In some embodiments, the anti-reflection film 50 is a low refractive index layer such as a layer of silicon dioxide or magnesium fluoride. In some other embodiments, the anti-reflection film 50 is a multilayer structure in which high refractive index layers (such as layers of titanium dioxide or niobium pentoxide or zirconium oxide) and low refractive index layers (such as layers of silicon dioxide or magnesium fluoride) are alternately arranged in sequence. When the anti-reflection film 50 is a multilayer structure, the film layer of the anti-reflection film 50 closest to the light guide layer 11 is a silicon dioxide layer, and the thickness of the silicon dioxide layer is greater than or equal to 20 nm, this is because silicon dioxide has a good planarization effect.

In some implementations, the thickness of the anti-reflection film 50 ranges from 20 nm to 800 nm. Specifically, the thickness of the anti-reflection film 50 may be, but is not limited to, 20 nm, 60 nm, 100 nm, 200 nm, 300 nm, 400 nm, 500 nm, 600 nm, 700 nm, 800 nm, etc.

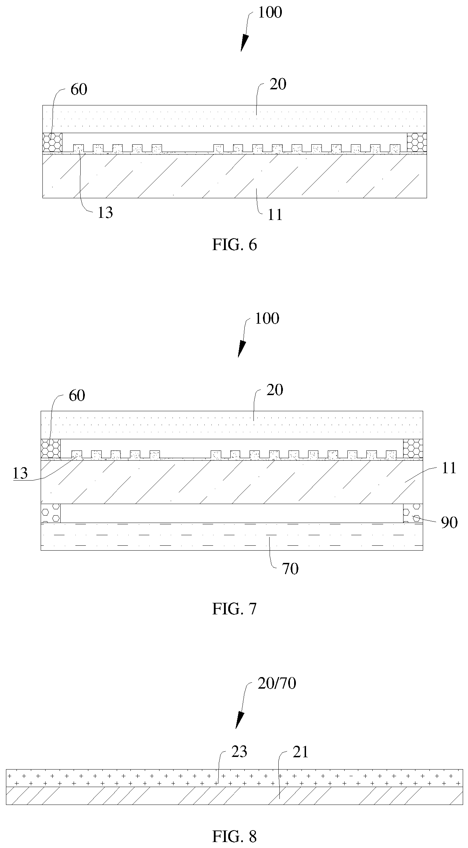

As illustrated in FIG. 6, the optical waveguide assembly 100 of the embodiments of the first aspect of the present disclosure further includes a first protective layer 20 and a first connector 60. The first protective layer 20 is arranged on a side of the grating layer 13 facing away from the light guide layer 11 and is spaced apart from the grating layer. The first connector 60 is arranged between the optical waveguide 10 and the first protective layer 20 and connected with each of the first protective layer 20 and the optical waveguide 10.

In some implementations, the first connector 60 is an adhesive frame, that is, a hollow annular adhesive layer. It may be understood that the first connector 60, the first protective layer 20 and the optical waveguide 10 enclose a closed space (not shown). The first connector 60 is configured to connect the first protective layer 20 and the optical waveguide 10 together, but leave a certain gap between the first protective layer 20 and the optical waveguide 10 to prevent the first protective layer 20 from being attached to the optical waveguide 10 and thus prevent the transmission of the optical signal in the optical waveguide 10 from being affected.

In some implementations, the material of the first protective layer 20 may be, but is not limited to, polymethyl methacrylate, polycarbonate, and the like.

As illustrated in FIG. 7, the optical waveguide assembly 100 of the embodiment further includes a second protective layer 70 and a second connector 90. The second protective layer 70 is arranged on a side of the light guide layer 11 facing away from the grating layer 13 and is spaced apart from the light guide layer. The second connector 90 is arranged between the optical waveguide 10 and the second protective layer 70 and connected with each of the second protective layer 70 and the optical waveguide 10.

In some implementations, the second connector 90 is an adhesive frame, that is, a hollow annular adhesive layer. It may be understood that the second connector 90, the second protective layer 70 and the optical waveguide 10 enclose a closed space (not shown). The second connector 90 is configured to connect the second protective layer 70 and the optical waveguide 10 together, but leave a certain gap between the second protective layer 70 and the optical waveguide 10, so as to prevent the second protective layer 70 from being attached to the optical waveguide 10 and thus prevent the transmission of the optical signal in the optical waveguide 10 from being affected.

In some implementations, the material of the second protective layer 70 may be, but is not limited to, polymethyl methacrylate, polycarbonate, and the like.

As illustrated in FIG. 8, in some embodiments, each of the first protective layer 20 and the second protective layer 70 includes a protective substrate layer 21 and a color-changing layer 23. The color-changing layer 23 is arranged on a surface of the protective substrate layer 21 to change the color of the protective substrate layer 21 so as to enhance the color effect of the first protective layer 20. In some implementations, the color-changing layer 23 may be arranged on one surface (as illustrated in FIG. 8) or two opposite surfaces (not shown) of the protective substrate layer 21.

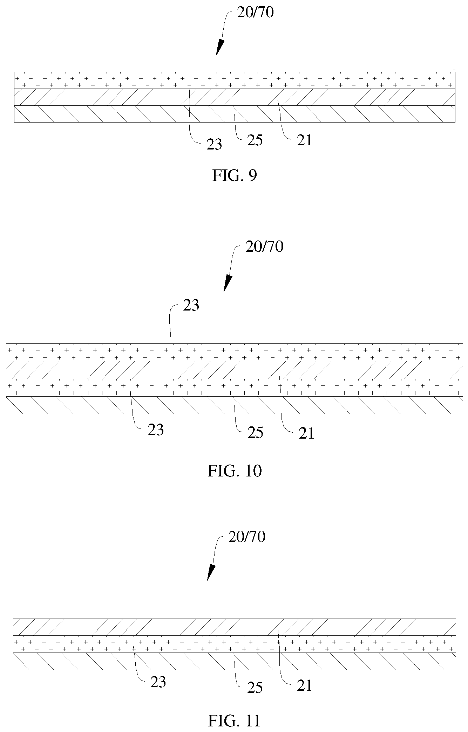

As illustrated in FIG. 9 to FIG. 11, in some other embodiments, each of the first protective layer 20 and the second protective layer 70 further includes an anti-reflection coating 25 (AR coating), and the anti-reflection coating 25 is arranged on a surface of the protective substrate layer 21, or a surface of the color-changing layer 23 facing away from the protective substrate layer 21.

In some implementations, when one surface of the protective substrate layer 21 is provided thereon with the color-changing layer 23, the anti-reflection coating 25 may be arranged on at least one of the surface of the color-changing layer 23 facing away from the protective substrate layer 21 and the surface of the protective substrate layer 21 facing away from the color-changing layer 23. When the two opposite surfaces of the first protective layer 20 are provided thereon with the color-changing layer 23, the surface of each of the two color-changing layers 23 that faces away from the protective substrate layer 21 is provided with the anti-reflection coating 25.

The optical waveguide 10 of the first aspect of the present disclosure is further described below through specific examples.

### [Example 1]

The optical waveguide 10 of this example was prepared through the following operations.
1) The light guide layer 11 was prepared by using polycarbonate through injection molding, and the thickness of the light guide layer 11 was 1 mm. The light guide layer 11 may be molded into a preset thickness at one time, or may be first molded into a large block of blank, and then further machined (in which a block of blank may be cut into many small pieces, or a thick blank may be mechanically cut into thin pieces) and polished to a preset thickness of 1 mm.
2) An imprinting mold was provided, where the imprinting mold had a grating texture complementary to the structure of the grating layer 13.
3) After the light guide layer 11 was cleaned, a SiO₂ layer (i.e., a barrier layer 30; in other embodiments, the barrier layer 30 may also be made of an acrylic resin and formed through UV curing) was evaporated on one surface of the light guide layer 11. The thickness of the SiO₂ layer was 300 nm. An anti-reflection film 50 was evaporated on a surface of the light guide layer 11 facing away from the barrier layer 30. The thickness of the anti-reflection film 50 was 300 nm. An imprint resist was coated on a surface of the SiO₂ layer (the barrier layer 30) to reach a thickness of 1 um, the imprint resist was a UV-curable imprint resist. After the imprint resist was coated, it needs to be baked to make the resist dry, and it was baked at 100°C for 30 seconds. Then, the imprinting mold was applied on the imprint resist material to perform imprinting, and UV-curing was performed simultaneously (nanoimprinting). The imprinting speed was 1 mm/s and the curing energy was 3000 mJ. Finally, the optical waveguide 10 for AR glasses was obtained by cutting according to a preset shape.

### [Example 2]

The optical waveguide 10 of this example was prepared through the following operations.
1) The light guide layer 11 was prepared by using polyurethane through a casting process, and then it was machined and polished to a thickness of 1 mm.
2) An imprinting mold was provided, where the imprinting mold had a grating texture complementary to the structure of the grating layer 13.
3) After the light guide layer 11 was cleaned, an imprint resist was coated on a surface of the light guide layer 11 to reach a thickness of 1 um, where the imprint resist was a UV-curable imprint resist. After the imprint resist was coated, it needs to be baked to make the resist dry, and it was baked at 100°C for 30 seconds. Then, the imprinting mold was applied on the imprint resist material to perform imprinting, and UV-curing was performed simultaneously (nanoimprinting). The imprinting speed was 1 mm/s and the curing energy was 3000 mJ. Finally, the optical waveguide 10 for AR glasses was obtained by cutting according to a preset shape.

### [Example 3]

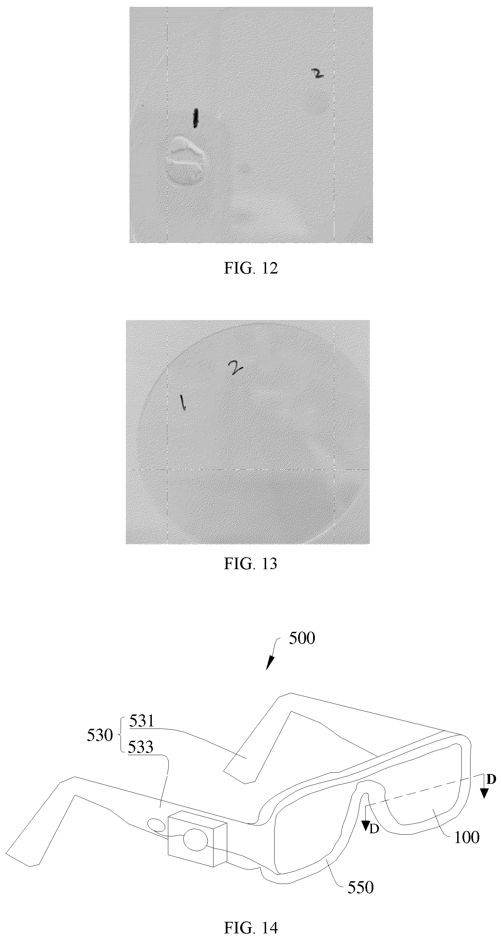

A polycarbonate substrate was provided, and imprint resists were dripped on the polycarbonate substrate and cured. Changes on the surface of the polycarbonate substrate on which the imprint resists were applied was observed, as illustrated in FIG. 12. In FIG. 12, label 1 represented an imprint resist of model number PixNIL ST2 produced by Pixelligent, and label 2 represented an imprint resist of model number IOC-172 produced by InKron. As can be seen from FIG. 12, when the imprint resists were directly applied on the polycarbonate substrate, it was observed that the surface of the polycarbonate substrate turned white and the light transmittance decreased.

### [Comparative Example 1]

A polycarbonate substrate was provided, an acrylate resin was coated on a surface of the polycarbonate substrate, and a flat plate was used to press the resin to form an acrylate resin layer (a barrier layer 30). Imprint resists were dripped on the acrylate resin layer and cured, and changes on a surface of the polycarbonate substrate on which the imprint resists were applied were observed, as shown in FIG. 13. In FIG. 13, label 1 represented an imprint resist of model number PixNIL ST2 produced by Pixelligent, and label 2 represented an imprint resist of model number IOC-172 produced by InKron. As can be seen from FIG. 13, in a case where a barrier layer was firstly provided between the imprint resist and the surface of the polycarbonate substrate, after the imprint resist was dripped, the entire product was still transparent from a visual effect, and the light transmittance was not affected, showing that the polycarbonate substrate was not be corroded by the imprint resist in this case.

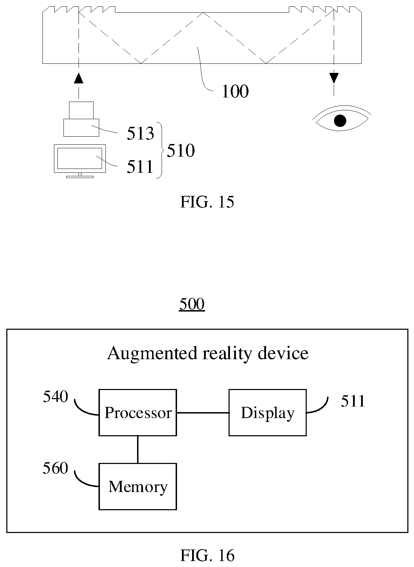

As illustrated in FIG. 14 and FIG. 15, the embodiments of a second aspect of the present disclosure further provide an augmented reality device 500. The augmented reality device 500 includes a projection optical engine 510 and the optical waveguide assembly 100 of the embodiments of the first aspect of the present disclosure. The projection optical engine 510 is configured to project an optical signal, the optical signal includes image information. The optical waveguide assembly 100 is arranged on an exit surface of the projection optical engine 510 and is configured to guide the optical signal.

In some implementations, the projection optical engine 510 includes a display 511 and a lens 513. The display 511 is configured to emit the optical signal. The lens 513 is arranged on a display surface side of the display 511, and is configured to modulate the optical signal in such a manner that the light (optical signal) with different field angles emitted from a same pixel point on the display 511 is modulated by the lens 513 and then emitted in the form of parallel light, which enables the image information in the optical signal to be viewed by the naked eye at an infinitely far position. The optical waveguide assembly 100 is arranged on a side of the lens 513 facing away from the display 511, and is configured to guide the optical signal modulated by the lens 513.

In some implementations, the grating layer 13 of the optical waveguide 10 is arranged to face away from the projection optical engine 510. In some another implementations, the grating layer 13 of the optical waveguide 10 is arranged to face the projection optical engine 510.

In some implementations, the display 511 may be a microdisplay. The display 511 includes a light-emitting unit, which may include but is not limited to at least one of a micro light-emitting diode (Micro LED) chip, a micro organic light-emitting diode (Micro OLED) chip or a micro liquid crystal display (Micro LCD). Under a same operating power condition, the brightness of Micro OLED is usually less than 5000 nits, the brightness of LCD is usually less than 15000 nits, and the brightness of Micro LED may be 2000000 nits, which is much higher than the former two. Therefore, compared with the Micro OLED display and the Micro LCD display, when the display 511 is a Micro LED display, the image outputted therefrom has a higher brightness. Compared with the Micro LCD display, the Micro LED display is a self-luminous light source, and has a better contrast and a smaller display delay when being used in the augmented reality device 500.

In some embodiments, an area on the display surface that can emit optical signals is an effective light-emitting area. The diagonal size of the effective light-emitting area of the display 511 ranges from 0.11 inches to 0.15 inches, and the aspect ratio of the effective light-emitting area is 4:3. In some other embodiments, the diagonal size of the effective light-emitting area of the display 511 ranges from 0.17 inches to 0.21 inches, and the aspect ratio of the effective light-emitting area is 16:9.

In some implementations, the color of the light emitted by the display 511 may be, but is not limited to, at least one of red, green, blue, etc. In a specific embodiment, the display 511 is a Micro LED that emits green light. In some other embodiments, it may also be other monochromatic Micro LEDs or multi-color Micro LEDs.

In some embodiments, the optical waveguide assembly 100 may also perform one-dimensional or two-dimensional pupil expansion on the image information in the optical signal emitted by the lens 513, to increase the range of dynamic orbit, thereby accommodating more people.

In some embodiments, the augmented reality device 500 of the present disclosure further includes a carrier 550, and the carrier 550 is configured to carry the optical waveguide assembly 100. In some implementations, the carrier 550 may be, but is not limited to, a spectacle frame of augmented reality glasses, a helmet body of an augmented reality helmet, a mask body of an augmented reality mask, etc. In some implementations, the optical waveguide assembly 100 may be provided on the carrier 550 by means of an adhesive or a fastener or the like.

In some embodiments, when the augmented reality device 500 is augmented reality glasses, the augmented reality device 500 of the embodiments of the present disclosure further includes a wearing part 530. The wearing part 530 is rotatably connected to the carrier 550, and the wearing part 530 is configured to clamp the wearer (such as a human head, or a head prosthesis). In some implementations, the wearing part 530 includes a first wearing subpart 531 and a second wearing subpart 533. The first wearing subpart 531 may be rotatably connected to one end of the carrier 550, and the second wearing subpart 533 may be rotatably connected to the other end of the carrier 550 away from the first wearing subpart 531. The first wearing subpart 531 cooperates with the second wearing subpart 533 to clamp the augmented reality device 500 to the wearer. In some implementations, the first wearing subpart 531 and the second wearing subpart 533 are also used for provision of the projection optical engine. In some implementations, the first wearing subpart 531 and the second wearing subpart 533 may be, but are not limited to, legs of the augmented reality device 500 (AR glasses).

As illustrated in FIG. 16, the augmented reality device 500 of the embodiments of the present disclosure further includes a processor 540 and a memory 560. The processor 540 is electrically connected with the display 511, and is configured to control the display 511 to emit the optical signal having image information. The memory 560 is electrically connected with the processor 540, and is configured to store program codes required for running of the processor 540, program codes required for controlling the display 511, image information emitted by the display 511, and the like.

In some implementations, the processor 540 includes one or more general-purpose processors, where the general-purpose processor may be any type of devices capable of processing electronic instructions, including a central processing unit (CPU), a microprocessor, a microcontroller, a main processor, a controller, and an ASIC, etc. The processor 540 is configured to execute various types of digitally stored instructions, such as software or firmware programs stored in the memory 560, which enables the computing device to provide a wide variety of services.

In some implementations, the memory 560 may include a volatile memory, such as a random access memory (RAM). The memory 560 may also include a non-volatile memory (NVM), such as a read-only memory (ROM), a flash memory (FM), a hard disk drive (HDD) or a solid-state drive (SSD). The memory 560 may also include a combination of the above-mentioned types of memory.

The augmented reality device 500 of the present disclosure may be, but is not limited to, a near-eye display device, such as augmented reality glasses (AR glasses), an augmented reality helmet, or an augmented reality mask. It is understandable that the augmented reality device 500 in the embodiments is merely one form of the augmented reality device 500 to which the optical waveguide assembly 100 is applied, and it should not be understood as a limitation on the augmented reality device 500 provided in the disclosure.

Reference to "embodiment" or "implementation" in the disclosure means that a particular feature, structure, or characteristic described in conjunction with the embodiment can be included in at least one embodiment of the present disclosure. The appearances of phrases in various places in the specification do not necessarily all refer to a same embodiment, nor separate or alternative embodiments mutually exclusive of other embodiments. It can be understood explicitly and implicitly by those skilled in the art that the embodiments described in the disclosure may be combined with other embodiments. In addition, it is understandable that the features, structures or characteristics described in the various embodiments of the present disclosure can be arbitrarily combined without contradiction therebetween to form another embodiment without departing from the spirit and scope of the technical solutions of the present disclosure.

Finally, it is notable that the above implementations are only used to illustrate the technical solutions of the present disclosure and are not intended to limit it. Although the present disclosure has been described in detail with reference to the above preferred implementations, those of ordinary skill in the art should understand that modification and equivalent replacement may be made to the technical solutions of the present disclosure without departing from the spirit and scope of the technical solutions of the present disclosure.

## Claims

1. An optical waveguide assembly, comprising an optical waveguide, the optical waveguide comprising:
a light guide layer, wherein the light guide layer is made of a resin material and configured to guide an optical signal entering the light guide layer; and
a grating layer arranged on a side of the light guide layer, wherein the grating layer comprises an in-coupling grating and an out-coupling grating spaced apart from each other, and a refractive index of the grating layer is greater than a refractive index of the light guide layer.

2. The optical waveguide assembly as claimed in claim 1, wherein the optical waveguide further comprises a barrier layer arranged between the light guide layer and the grating layer.

3. The optical waveguide assembly as claimed in claim 2, wherein the refractive index of the grating layer is n1, a refractive index of the barrier layer is n2, and |n1-n2|≤0.3.

4. The optical waveguide assembly as claimed in claim 3, wherein the refractive index of the light guide layer is n3, and |n2-n3|≤0.2.

5. The optical waveguide assembly as claimed in claim 2, wherein the barrier layer is an organic barrier layer or an inorganic barrier layer; the organic barrier layer comprises an acrylic resin; and the inorganic barrier layer comprises at least one of silicon oxide, magnesium oxide, and aluminum oxide.

6. The optical waveguide assembly as claimed in claim 5, wherein in a case where the barrier layer is an organic barrier layer, a thickness of the organic barrier layer ranges from 1 µm to 10 µm; and in a case where the barrier layer is an inorganic barrier layer, a thickness of the inorganic barrier layer ranges from 20 nm to 1000 nm.

7. The optical waveguide assembly as claimed in claim 2, wherein a roughness Ra of a surface of the barrier layer facing the grating layer is in a range of Ra≤2nm.

8. The optical waveguide assembly as claimed in claim 1, wherein a birefringence-induced phase difference of the light guide layer is less than or equal to 20 nm.

9. The optical waveguide assembly as claimed in claim 1, wherein the refractive index n3 of the light guide layer is in a range of n3≥1.55.

10. The optical waveguide assembly as claimed in claim 8, wherein the light guide layer is made of a thermoplastic resin or a thermosetting resin, the thermoplastic resin comprises polycarbonate, and the thermosetting resin comprises polyurethane.

11. The optical waveguide assembly as claimed in any one of claims 1 to 10, wherein the grating layer is made of a resin material, and a material of the light guide layer is different from a material of the grating layer.

12. The optical waveguide assembly as claimed in any one of claims 1 to 10, wherein the optical waveguide further comprises an anti-reflection film arranged on a surface of the light guide layer facing away from the grating layer.

13. The optical waveguide assembly as claimed in claim 12, wherein a reflectivity of the anti-reflection film is less than 1%.

14. The optical waveguide assembly as claimed in any one of claims 1 to 10, wherein the light guide layer is prepared through an injection molding process or a casting process, and the grating layer is prepared through a nanoimprinting process.

15. The optical waveguide assembly as claimed in any one of claims 1 to 10, wherein the optical waveguide assembly further comprises:
a first protective layer, wherein the first protective layer is arranged on a side of the grating layer facing away from the light guide layer and is spaced apart from the grating layer; and
a first connector, wherein the first connector is arranged between the optical waveguide and the first protective layer and connected with each of the first protective layer and the optical waveguide, and the first connector is provided around a periphery of the grating layer.

16. The optical waveguide assembly as claimed in claim 15, wherein the optical waveguide assembly further comprises:
a second protective layer, wherein the second protective layer is arranged on a side of the light guide layer facing away from the grating layer and is spaced apart from the light guide layer; and
a second connector, wherein the second connector is arranged between the optical waveguide and the second protective layer and connected with each of the second protective layer and the optical waveguide.

17. The optical waveguide assembly as claimed in claim 16, wherein each of the first protective layer and the second protective layer comprises a protective substrate layer and a color-changing layer, and the color-changing layer is arranged on a surface of the protective substrate layer.

18. The optical waveguide assembly as claimed in claim 17, wherein each of the first protective layer and the second protective layer further comprises an anti-reflection coating, and the anti-reflection coating is arranged on a surface of the protective substrate layer, or the anti-reflection coating is arranged on a surface of the color-changing layer facing away from the protective substrate layer.

19. An augmented reality device, comprising:
a projection optical engine, wherein the projection optical engine is configured to project an optical signal, and the optical signal comprises image information; and
an optical waveguide assembly as claimed in any one of claims 1 to 18, wherein the optical waveguide assembly is configured to guide the optical signal.

20. The augmented reality device as claimed in claim 19, wherein the augmented reality device further comprises a carrier configured to carry the optical waveguide assembly, and the carrier comprises a spectacle frame, a helmet body, or a mask body.
